# EUROPEAN PATENT APPLICATION

(11) **EP 3 965 436 A1**
(43) Date of publication of application: **09.03.2022**
(21) Application number: 21191474.2
(22) Date of filing: 16.08.2021
(51) Int. Cl.: H04R 25/00, H04R 29/00

(54) **DETECTION OF FILTER CLOGGING FOR HEARING DEVICES**

(30) Priority: 31.08.2020 DK PA202070561
(71) Applicant: GN Hearing A/S, 2750 Ballerup (DK)
(72) Inventor: MICHAELSEN, Anders Hjermø, DK-2750 Ballerup (DK); KUHLMANN, Lionel Plato, DK-2750 Ballerup (DK); DYSSEGARD, Christoffer, DK-2750 Ballerup (DK); BOTT, Anthea, DK-2750 Ballerup (DK)
(74) Representative: Aera A/S

(57) **Abstract**

An electronic device includes: an input configured to obtain information regarding a usage of a hearing device; a processing unit configured to detect a clogging of a filter of the hearing device based at least in part on the information regarding the usage of the hearing device; and an output configured to provide a signal indicating the clogging of the filter. An electronic device includes: a user interface configured to receive a user input associated with a usage of a hearing device; a screen; a processing unit configured to generate usage information regarding the usage of the hearing device; and a communication unit configured to provide the usage information regarding the usage of the hearing device to a server, and to receive a signal indicating a clogging of a filter of the hearing device, the signal being based on the usage information regarding the usage of the hearing device.

## Description

The field relates to hearing devices, and more particularly, to devices, systems, and methods for detecting clogging of hearing device filters.

### BACKGROUND

Hearing devices, such as hearing aids, headsets, earbuds, etc., may have one or more filters. For example, a hearing aid may have a microphone filter for protecting a microphone, and/or a receiver filter for protecting a receiver in the hearing aid.

Due to normal use of the hearing device, a hearing device filter may clog up over time. When the hearing device filter clogs up, the hearing device will not be able to output sound desirably or will not be able to output sound at all. For example, if the microphone filter is clogged up, the microphone will not be able to detect environmental sound surrounding the user. As a result, the hearing device will not be able to provide sound representative of the environmental sound to the user. Also, if the receiver filter is clogged up, the receiver of the hearing device will not be able to output sound for reception by the user of the hearing device.

Clogged hearing device filter is a significant problem for the user because if the user cannot hear sound desirably, the user may be discouraged from using the hearing device. In the case of the hearing device being a hearing aid, the user may be discouraged from using the hearing aid, and/or may incorrectly think that the user's hearing loss has gotten worse. In some cases, the user may send the hearing aid back to the manufacturer or hearing professional, thinking that the hearing aid is malfunctioned.

Sometimes, a hearing professional (e.g., a hearing aid fitter, a hearing aid retailer, etc.) may not discover the filter clogging problem when the user informs the hearing professional about performance issue with the hearing aid. The hearing professional may then send the hearing aid back to the manufacturer. The manufacturer may discover that there is nothing wrong with the hearing aid, except that the filter needs to be replaced. In the meantime, the hearing professional may provide a temporary hearing aid for the user to use until the user's hearing aid has been fixed by the manufacturer. Thus, filter replacements for hearing devices are inconvenient for hearing device users, and are costly and inefficient operations for the hearing professionals and hearing device manufacturers.

### SUMMARY

An electronic device includes: an input configured to obtain information regarding a usage of a hearing device; a processing unit configured to detect a clogging of a filter of the hearing device based at least in part on the information regarding the usage of the hearing device; and an output configured to provide a signal indicating the clogging of the filter.

Optionally, the information regarding the usage of the hearing device comprises an amount of volume increase, a number of volume adjustments, a time period in which the amount of volume increase or the number of volume adjustments occurred, or a combination of two or more of the foregoing.

Optionally, the information regarding the usage of the hearing device comprises a number of changes in hearing program in the hearing device, a frequency of the changes in the hearing program, a time period in which the changes in the hearing program occurred, or a combination of two or more of the foregoing.

Optionally, the information regarding the usage of the hearing device comprises a number of re-boots of the hearing device, a frequency of the re-boots of the hearing device, a time period in which the re-boots occurred, or a combination of two or more of the foregoing.

Optionally, the information regarding the usage of the hearing device comprises a duration of a usage of the hearing device per day, a change in the duration of the usage, or a combination of both.

Optionally, the information regarding the usage of the hearing device comprises date of last filter replacement, fitting date, logged user activity when using the hearing device, or a combination of two or more of the foregoing.

Optionally, the processing unit is configured to detect the clogging of the filter of the hearing device based at least in part on a satisfaction of a criterion that a change in volume exceeds a threshold within a certain period.

Optionally, the threshold comprises 3 db or higher, and/or wherein the certain period is less than 3 weeks.

Optionally, the processing unit is configured to detect the clogging of the filter of the hearing device by: determining whether a change in volume within a period exceeds a volume change threshold; determining whether a number of re-boots within the period exceeds a re-boot threshold; determining whether a number of program changes within the period exceeds a program change threshold; or any combination of two or more of the foregoing.

Optionally, the processing unit is configured to detect the clogging of the filter using a neural network model.

Optionally, the processing unit is configured to perform machine learning.

Optionally, the filter comprises a microphone filter or a receiver filter.

Optionally, the electronic device comprises a server.

Optionally, the server is configured to communicate with the hearing device, to communicate with an accessory device associated with the hearing device, or to communicate with both; and wherein the server is configured to provide the signal indicating the clogging of the filter for reception by the hearing device and/or by the accessory device.

Optionally, the server is configured to communicate with a hearing professional device, and wherein the server is configured to provide the signal indicating the clogging of the filter for reception by the hearing professional device.

Optionally, the server is configured to obtain the information regarding the usage of the hearing device from the hearing device, from a hearing professional device, from an accessory device associated with the hearing device, or from a combination of two or more of the foregoing.

A hearing system includes the electronic device, and an accessory device associated with the hearing device, wherein the accessory device is configured to obtain information regarding the usage of the hearing device from the hearing device, and to provide the information regarding the usage of the hearing device to the server.

Optionally, the electronic device comprises an accessory device configured to communicate with the hearing device.

Optionally, the accessory device is configured to communicate with a hearing professional device, and wherein the accessory device is configured to provide the signal indicating the clogging of the filter for reception by the hearing professional device.

Optionally, the accessory device is configured to provide the signal indicating the clogging of the filter for reception by the hearing device and/or by a server.

Optionally, the accessory device is configured to obtain the information regarding the usage of the hearing device from the hearing device, from a hearing professional device, from a server, or from a combination of two or more of the foregoing.

Optionally, the electronic device comprises the hearing device.

Optionally, the hearing device comprises: a microphone configured to generate a microphone signal; a hearing loss compensation unit configured to generate an output based on the microphone signal; and a receiver configured to generate sound based on the output.

Optionally, the input of the hearing device is configured to obtain the information regarding the usage of the hearing device by receiving a control signal caused by an operation of a control at the hearing device.

Optionally, the input of the hearing device is configured to obtain the information regarding the usage of the hearing device from an accessory device, from a hearing professional device, from a server, or from a combination of two or more of the foregoing.

An electronic device includes: a user interface configured to receive a user input associated with a usage of a hearing device; a screen configured to display device information regarding the hearing device; a processing unit configured to process the user input to generate usage information regarding the usage of the hearing device; and a communication unit configured to provide the usage information regarding the usage of the hearing device to a server; wherein the communication unit is also configured to receive a signal indicating a clogging of a filter of the hearing device, the signal being based on the usage information regarding the usage of the hearing device.

Other and further aspects and features will be evident from reading the following detailed description.

### BRIEF DESCRIPTION OF THE DRAWINGS

The drawings illustrate the design and utility of embodiments, in which similar elements are referred to by common reference numerals. In order to better appreciate how advantages and objects are obtained, a more particular description of the embodiments will be described with reference to the accompanying drawings. Understanding that these drawings depict only exemplary embodiments and are not therefore to be considered limiting in the scope of the claimed invention.
**FIG. 1** illustrates a hearing system including a hearing device, an accessory device associated with the hearing device, and a server.
**FIG. 2** illustrates an example of the accessory device of **FIG. 1****.**
**FIG. 3** illustrates an example of an electronic device that may be used to implement or may be included in the server of **FIG. 1****.**
**FIG. 4** illustrates an example of a hearing device.
**FIG. 5** illustrates a variation of the hearing system of **FIG. 1****.**
**FIG. 6** illustrates another example of an accessory device.
**FIG. 7** illustrates another example of a hearing device.
**FIG. 8** illustrates a method for detecting a clogging of a filter of a hearing device.
**FIG. 9** illustrates a specialized processing system for implementing one or more electronic devices described herein.

### DETAILED DESCRIPTION

Various embodiments are described hereinafter with reference to the figures. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages of the invention shown. An aspect or an advantage described in conjunction with a particular embodiment is not necessarily limited to that embodiment and can be practiced in any other embodiments even if not so illustrated or if not so explicitly described.

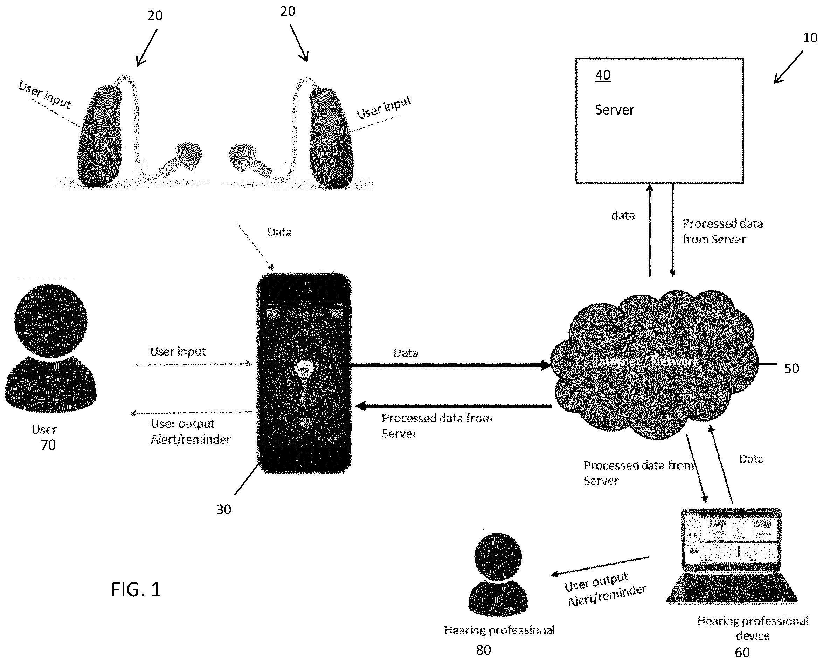

**FIG. 1** illustrates a hearing system 10 including a hearing device 20, an accessory device 30 associated with the hearing device 20, and a server 40. The server 40 may be associated with a hearing device manufacturer (e.g., owned or controlled by the hearing device manufacturer), or may be associated with another party different from the hearing device manufacturer. The hearing device 20 is a hearing aid configured to compensate for a hearing loss of a user 70 of the hearing device 20. In some embodiments, the user 70 may wear two hearing devices 20 (e.g., left and right hearing devices). In other embodiments, the user 70 may wear only one hearing device 20. In the illustrated embodiments, the accessory device 30 is a mobile phone of the user 70, and it includes an application configured to control an operation of the hearing device 20. The accessory device 30 may be configured to communicate with the hearing device 20 via a communication component, such as a Bluetooth communication unit, or a cable. The accessory device 30 is also configured to communicate with the server 40 through a network 50 (e.g., the Internet). In other embodiments, the accessory device 30 may be a computer, a laptop, an iPad, a tablet, a remote control, a charger, a television, or any of other electronic devices.

During use, the user 70 may provide user input to the accessory device 30 to control an operation of the hearing device 20 via the application stored in the accessory device 30. For example, the user 70 may use the application in the accessory device 30 to adjust a volume of the hearing device 20, to change a hearing processing program in the hearing device 20, to change an operation mode of the hearing device 20, or to perform any of other functions to control an operation of the hearing device 20. The accessory device 30 then processes the user input to generate usage information regarding the usage of the hearing device 20, and transmits the usage information for reception by the server 40 via the network 50.

In the illustrated embodiments, the server 40 is configured to detect (e.g., determine) a clogging of a filter of the hearing device 20 based at least in part on the information regarding the usage of the hearing device 20. It should be noted that the term "detect" or other similar terms such as "detecting" includes the act or function of determining (e.g., determining a result or condition based on an algorithm or process), and should not be limited to the act or function of sensing. The filter of the hearing device 20 for which the clogging is detected may be a microphone filter or a receiver filter.

In some embodiments, the information regarding the usage of the hearing device 20 may comprise an amount of volume increase, a number of volume adjustments, a time period in which the amount of volume increase or the number of volume adjustments occurred, or a combination of two or more of the foregoing. In such cases, a processing unit of the server 40 is configured to detect the clogging of the filter of the hearing device 20 based at least in part on an amount of volume increase, a number of volume adjustments, a time period in which the amount of volume increase or the number of volume adjustments occurred, or a combination of two or more of the foregoing.

In some embodiments, information regarding an amount of volume increase may be expressed as an amount of db increase (with respect to fitted value, or with respect to a previous value that occurred a certain period ago). In other embodiments, the information regarding an amount of volume increase may be expressed as a percentage of increase, or as a factor of increase (with respect to fitted value, or with respect to a previous value that occurred a certain period ago). For example, the factor of increase may be calculated as dB2/dB1, wherein dB2 is the adjusted volume, and dB1 is the fitted value (e.g., a reference value determined during a fitting of the hearing device 20) or a previous value that occurred some time ago (e.g., 2 weeks ago).

Alternatively or additionally, the information regarding the usage of the hearing device 20 may comprise a number of changes in hearing program in the hearing device 20, a frequency of the changes in the hearing program, a time period in which the changes in the hearing program occurred, or a combination of two or more of the foregoing. In such cases, a processing unit of the server 40 is configured to detect the clogging of the filter of the hearing device 20 based at least in part on a number of changes in hearing program in the hearing device, a frequency of the changes in the hearing program, a time period in which the changes in the hearing program occurred, or a combination of two or more of the foregoing.

Alternatively or additionally, the information regarding the usage of the hearing device 20 may comprise a number of reboots of the hearing device 20, a frequency of the reboots, a time period in which the reboots occurred, or a combination of two or more of the foregoing. In such cases, the processing unit of the server 40 is configured to detect the clogging of the filter of the hearing device 20 based at least in part on a number of reboots of the hearing device 20, a frequency of the reboots, a time period in which the reboots occurred, or a combination of two or more of the foregoing.

Alternatively or additionally, the information regarding the usage of the hearing device 20 may comprise a duration of a usage of the hearing device per day, a change in the duration of the usage, or a combination of both. In such cases, a processing unit of the server 40 is configured to detect the clogging of the filter of the hearing device 20 based at least in part on a duration of a usage of the hearing device per day, a change in the duration of the usage, or a combination of both.

Alternatively or additionally, the information regarding the usage of the hearing device 20 may comprise date of last filter replacement, fitting date, logged user activity performed to control the hearing device 20, or a combination of two or more of the foregoing. In such cases, a processing unit of the server 40 is configured to detect the clogging of the filter of the hearing device 20 based at least in part on date of last filter replacement, fitting date, logged user activity performed to control the hearing device 20, or a combination of two or more of the foregoing.

In some embodiments, the usage information may be any of the above information expressed as a value over a certain period. For example, the usage information may be a change in volume within a period, a number of re-boots within a period, a number of program changes within a period, etc. In some cases, the change in volume within a period may be expressed as a change in volume per time period. Similarly, the number of re-boots within a period may be expressed as a number of re-boots per time period. Also, the number of program changes within a period may be expressed as a number of program changes per time period. The time period may be a month, 3 weeks, 2 weeks, 3 days, etc. In addition, the value over a certain period may be an average value over a certain period. For example, the change in volume within a period may be an average change in volume within a period. Similarly, a number of re-boots within a period may be an average number of re-boots within a period. Also, a number of program changes within a period may be an average number of program changes within a period.

In some embodiments, the processing unit of the server 40 may detect the clogging of the filter of the hearing device 20 based at least in part on any combination of the above information, or any combination of the information described herein.

In some embodiments, the processing unit of the server 40 may be configured to detect the clogging of the filter of the hearing device 20 based at least in part on a satisfaction of a criterion that a change in volume exceeds a threshold within a certain period. For example, the threshold may be 3 db or higher, and/or the certain period may be less than 3 weeks.

In some embodiments, the processing unit of the server 40 is configured to detect the clogging of the filter of the hearing device by: determining whether a change in volume exceeds a first threshold (e.g., 3db) within a certain period (e.g., 3 weeks, 2 weeks, etc.), and determining whether a decrease in a duration of a usage of the hearing device 20 per day exceeds a second threshold. For example, if the usage information received by the server 40 indicates that (1) the user 70 adjusted the volume of the hearing device 20 to increase it by 5db within 3 days, and (2) the user 70 has decreased a usage of the hearing device 20 by more than 50% (e.g., after the volume has been adjusted or during the period when the volume was adjusted), then the processing unit of the server 40 may determine that the filter of the hearing device 20 has clogged.

The above technique for determining clogging of filter is advantageous because it distinguishes clogged filter from hearing loss. In both the clogged filter condition and the condition of increase in hearing loss, the user 70 may control the hearing device 20 to increase the volume output. However, worsening of hearing loss generally occurs much slower compared to clogged filter. For example, a user' hearing loss may worsen by 2-3 db or less per year. On the other hand, in the case of a clogged filter, the user may increase the volume output of the hearing device by more than 3 db within 3 weeks or less. Accordingly, if the user 70 increase the volume of sound output by the hearing device 20 significantly within a short period, it is more likely that the user's inability to hear sound is due to clogged filter than due to hearing loss. Similarly, if the user 70 adjusts the operation mode and/or the hearing program in the hearing device 20 significantly over a short period, it is also more likely that the user's inability to hear sound desirably is due to clogged filter than due to hearing loss.

In addition, the technique of considering change in wear time per day in determining clogged filter is advantageous. This is because if wear time per day was high, and then if it drops rapidly, then it is further indication of clogging of filter. Considering both (1) change in volume within a short period, and (2) change in wear time, when determining clogged filter is also advantageous because it allows the determination of the clogged filter to be made more accurately. In other embodiments, the change in wear time may not be included in the consideration.

In other embodiments, the processing unit of the server 40 may be configured to detect the clogging of the filter of the hearing device by: determining whether a change in volume within a period exceeds a volume change threshold; determining whether a number of re-boots within the period exceeds a re-boot threshold; determining whether a number of program changes within the period exceeds a program change threshold; or any combination of two or more of the foregoing.

In further embodiments, other "odd" behavior(s) of the user that may correlate with clogged filter may be considered to determine whether the filter of the hearing device 20 is clogged or not.

In some embodiments, the processing unit of the server 40 may be configured to detect the clogging of the filter of the hearing device 20 by determining whether the information regarding the usage of the hearing device 20 meets one or more criterion. The one or more criterion may be one or more predetermined rules set up in the server 40. In other embodiments, the one more criterion may be one or more predetermined rules set up in the accessory device 30, in the hearing device 20, in a hearing professional device 60 of a hearing professional 80, or any combination of two or more of the foregoing.

In other embodiments, the processing unit of the server 40 may be configured to detect the clogging of the filter using a neural network model. In such cases, the processing unit of the server 40 may be configured to perform machine learning. The machine learning may correlate different types of usage information regarding usage of hearing devices with clogged filter detections. The machine learning may be utilized to create the neural network model, which is then employed to detect clogged filters of hearing devices. In some cases, the neural network model may resides in the server 40. In other embodiments, the neural network model may be transmitted to the accessory device 30, to the hearing device 20, to the hearing professional device 60, or to any combination of two or more of the foregoing.

In some embodiments, the processing unit of the server 40 may obtain usage information regarding the hearing device 20 that are transmitted via the network 50 from the accessory device 30, from the hearing professional device 60 of the hearing professional 80, from the hearing device 20, or from any combination of two or more of the foregoing. The usage information may be any information indicating how the user 70 uses the hearing device 20, and any information regarding the hearing device 20, such as any information that may affect or may associate with (e.g., relate, affect, etc.) how the user 70 uses the hearing device 20. By means of non-limiting examples, the usage information may be an amount of volume increase, a number of volume adjustments, a time period in which the amount of volume increase or the number of volume adjustments occurred, a number of changes in hearing program in the hearing device, a frequency of the changes in the hearing program, a time period in which the changes in the hearing program occurred, a duration of a usage of the hearing device per day, a change in the duration of the usage, date of last filter replacement, fitting date, logged user activity when using the hearing device, time since last fitting, configuration of the hearing device 20, whether the hearing device 20 is a new device, whether the hearing device 20 is a refurbished device (which may indicate how old is the filter), or any combination of two or more of the foregoing. In some cases, usage information may also include information from the hearing professional device 60. For example, the hearing professional device 60 may include fitting software configured to fit hearing devices to users. Information regarding the fitting of the hearing device 20 may be included as usage information in some embodiments (because information regarding the fitting may affect how the user 70 uses the hearing device 20). In some embodiments, the processing unit of the server 40 may be configured to perform machine learning to look for patterns of the usage information that correlate with clogged filters, and to determine a model based on these patterns. The processing unit of the server 40 may then use the model to detect clogged filters for different hearing devices based on respective usage information for different respective users.

In some embodiments, machine learning may be performed by the server 40 to find pattern(s) in the collected data that correlate with pre-learned data that has been verified to correlate with clogged filters. In other embodiments, the machine learning may be performed by the accessory device 30, by the hearing device 20, by the hearing professional device 60, or any combination of two or more of the foregoing.

As used in this specification, the term "neural network" refers to any computing device, system, or module made up of a number of interconnected processing elements, which process information by their dynamic state response to input. In some embodiments, the neural network may have deep learning capability and/or artificial intelligence. In some embodiments, the neural network may be simply any computing element that can be trained using one or more data sets. By means of non-limiting examples, the neural network may be a perceptron, a feedforward neural network, a radial basis neural network, a deep-feed forward neural network, a recurrent neural network, a long/short term memory neural network, a gated recurrent unit, an auto encoder neural network, a variational auto encoder neural network, a de-noising auto encoder neural network, a sparse auto encoder neural network, a Markov chain neural network, a Hopfield neural network, a Boltzmann machine, a restricted Boltzmann machine, a deep belief network, a convolutional network, a de-convolutional network, a deep convolutional inverse graphics network, a generative adversarial network, a liquid state machine, an extreme learning machine, an echo state network, a deep residual network, a Kohonen network, a support vector machine, a neural turing machine, a modular neural network, a sequence-to-sequence model, etc., or any combination of the foregoing.

After the processing unit of the server 40 has determined that the filter of the hearing device 20 has clogged, the processing unit of the server 40 may generate a signal indicating the clogging of the filter. In some embodiments, the processing unit of the server 40 may generate the signal for reception by a module in the server 40. The module in the server 40 may be configured to generate one or more messages and/or notifications based on the signal, and to transmit the one or more messages and/or notifications via the network 50 to the accessory device 30, to the hearing device 20, to the hearing professional device 60 of the hearing professional 80, or to any combination of two or more of the foregoing. In other embodiments, the signal generated by the processing unit of the server 40 may be transmitted by the server 40 via the network 50 to the accessory device 30, to the hearing device 20, to the hearing professional device 60, or to any combination of two or more of the foregoing.

In some embodiments, after the accessory device 30 receives the signal / message / notification from the server 40, an application in the accessory device 30 may generate a graphic to inform the user 70 that the hearing device 20 has a clogged filter. Alternatively or additionally, the accessory device 30 may generate a control signal to cause the hearing device 20 to output an audio notification informing the user 70 that the hearing device 20 has a clogged filter.

In some embodiments, after the hearing professional device 60 receives the signal / message / notification from the server 40, the hearing professional device 60 may inform the hearing professional 80, through a graphical user interface, about the clogged filter of the hearing device 20. The hearing professional device 60 may include an application for generating the graphical user interface. The application may also be configured to assist the hearing professional 80 to connect with the user 70, and/or to help the user 70 in a process to replace the filter of the hearing device 20.

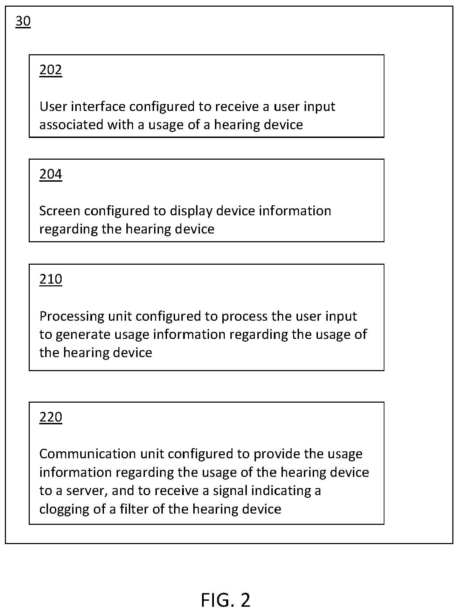

**FIG.** 2 illustrates an example of the accessory device 30 of **FIG.** 1. The accessory device 30 includes a user interface 202 configured to receive a user input associated with a usage of a hearing device 20, a screen 204 configured to display device information regarding the hearing device 20, a processing unit 210 configured to process the user input to generate usage information regarding the usage of the hearing device 20, and a communication unit 220 configured to provide the usage information regarding the usage of the hearing device to the server 40, and to receive a signal indicating a clogging of a filter of the hearing device 20. By means of non-limiting examples, the user interface 202 may be one or more buttons, one or more knobs, one or more switches, a keyboard, a mouse, a touchpad, a trackball, a touchscreen, a touch-sensitive layer under a screen, a graphical interface through which a user can enter one or more input, or any device and/or application that is capable of receiving user input. The processing unit 210 may include hardware, software, or a combination of both. By means of non-limiting examples, hardware of the processing unit 210 may include one or more processors and/or more or more integrated circuits. The communication unit 220 may be a wireless unit configured to perform wireless communication, or a cable interface configured to output data to, and to receive data from, a cable. In other embodiments, the communication unit 220 may be any communication interface, such as a hardware interface or software interface.

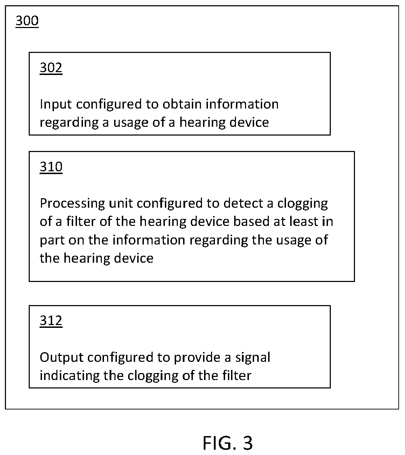

**FIG. 3** illustrates an example of an electronic device 300 that may be used to implement or may be included in the server 40 of **FIG. 1****.** The electronic device 300 includes an input 302 configured to obtain information regarding a usage of the hearing device 20, a processing unit 310 configured to detect a clogging of a filter of the hearing device 20 based at least in part on the information regarding the usage of the hearing device 20, and an output 312 configured to provide a signal indicating the clogging of the filter of the hearing device 20. The processing unit 310 of the electronic device 300 may include hardware, software, or a combination of both. By means of non-limiting examples, hardware of the processing unit 310 may include one or more processors and/or more or more integrated circuits.

The input 302 may be a communication interface for providing information to the processing unit 310, wherein the communication interface may be a hardware interface and/or software interface. In some embodiments, the input 302 may receive the information regarding the usage of the hearing device 20 from one or more devices outside the server 40, such as, from the accessory device 30, from the hearing device 20, from the hearing professional device 60, or any combination to two or more of the foregoing. In other embodiments, the input 302 may receive the information regarding the usage of the hearing device 20 from a module, such as a module in the electronic device 300, or a module in the server 40. In some embodiments, the input 302 may be a wireless unit. In other embodiments, the input 302 may be a cable connector. In further embodiments, the input 302 may include an antenna.

The output 312 may be a communication interface for outputting the signal indicating the clogging of the filter, wherein the communication interface may be a hardware interface and/or software interface. In some embodiments, the output 312 may output the signal to a module, such as a module in the electronic device 300, or a module in the server 40. In other embodiments, the output 312 may output the signal to one or more devices outside the server 40, such as to the accessory device 30, to the hearing device 20, to the hearing professional device 60, or any combination to two or more of the foregoing. In some embodiments, the output 312 may be a wireless unit. In other embodiments, the output 312 may be a cable connector. In further embodiments, the output 312 may include one or more antennas. In still further embodiments, the input 302 and the output 312 may be implemented as the same communication interface, such as the same wireless unit, the same cable connector, the same antenna, etc.

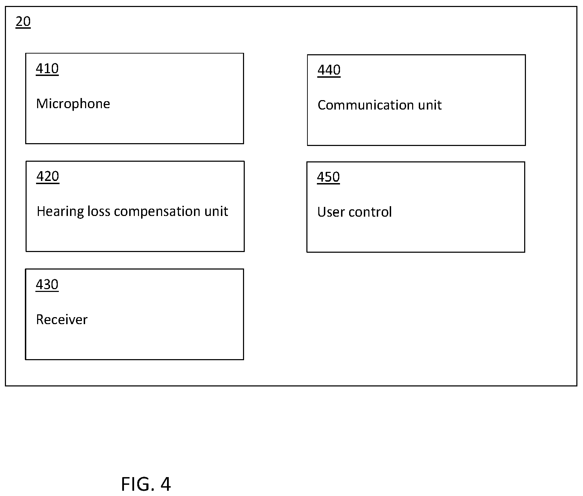

**FIG. 4** illustrates an example of the hearing device 20. The hearing device includes a microphone 410, a hearing loss compensation unit 420, a receiver 430, a communication unit 440, and a user control 450. The microphone 410 is configured to receive sound from an environment outside the user 70, and generate a microphone signal based on the received sound. The hearing loss compensation unit 420 is configured to perform signal processing to compensate for a hearing loss of the user 70, and to generate an output based on the microphone signal from the microphone 410. The receiver 430 is configured to generate sound for reception by an eardrum of the user 70 based on the output from the hearing loss compensation unit 420. The communication unit 440 is configured to communicate with one or more devices, such as another hearing device 20 of the user 70, the accessory device 30, the server 40, the hearing professional device 60, etc. The communication unit 440 may be one or more wireless communication units and/or one or more cable connectors. In some embodiments, the communication unit 440 may include one or more antennas. The user control 450 may be one or more buttons, one or more knobs, one or more switches, or any combination of the foregoing. The user control 450 is configured to allow the user 70 of the hearing device 20 to control an operation of the hearing device 20. For example, the user 70 may operate the user control 450 to adjust a volume of sound, to change an operation mode of the hearing device 20, to change a hearing program of the hearing device 20, to change an operation parameter of the hearing device 20, etc.

The hearing device 20 may be a hearing aid, such as an in-the-canal (ITC) hearing aid, a completely-in-canal (CIC) hearing aid, an invisible-in-the-canal (IIC) hearing aid, a receiver-in-the-ear (RITE) hearing aid, a receiver-in-canal (RIC) hearing aid, etc.

In some embodiments, the hearing device 20 may optionally further include an additional microphone for detecting environmental sound. In such cases, the microphones together provide directionality of sound. The filter of the hearing device 20 for which clogging is detected may be for both of the microphones.

In other embodiments, the hearing device 20 may not be a hearing aid. Instead, the hearing device 20 may be a headset, an earbud, a hearing protection device, etc. In some embodiments, the hearing device 20 may not include the microphone 410. Also, in some embodiments, the hearing device 20 may not include the hearing loss compensation unit 420. In other embodiments, the hearing device 20 may include a processing unit configured to provide signal processing related to a hearing of the user 70. For example, the processing unit may be configured to perform noise reduction, noise cancellation, speech recognition, bass adjustment, treble adjustment, fad balancing, processing of user input, etc.

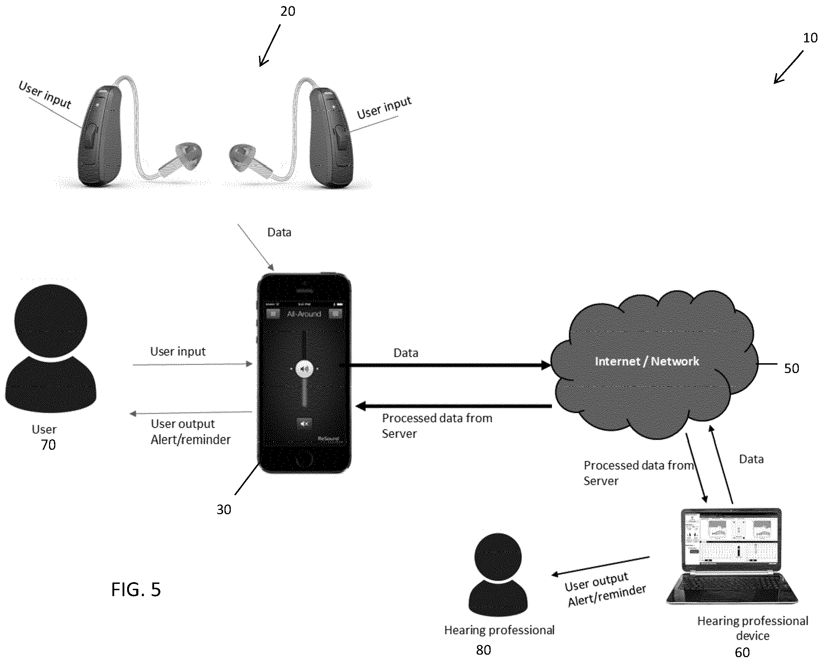

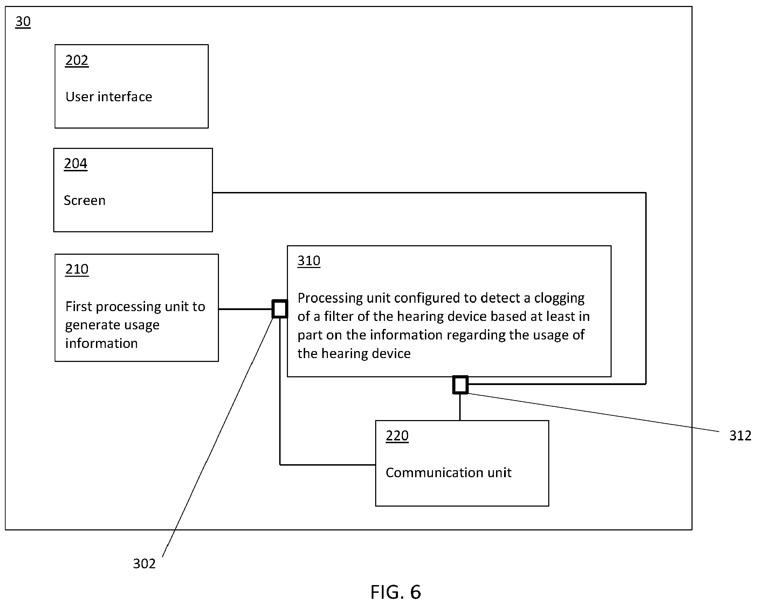

In the above embodiments, the server 40 is described as detecting clogged filter of the hearing device 20. In other embodiments, the detection of the clogged filter of the hearing device 20 may be performed by the accessory device and/or by the hearing device 20. **FIG. 5** illustrates a variation of the hearing system 10 of **FIG. 1****.** The hearing system 10 of **FIG. 5** is the same as that of **FIG. 1****,** except that the server 40 is not needed for the detection of the clogged filter of the hearing device 20. In such cases, the accessory device 30 may be configured to detect the clogged filter of the hearing device 20. In some embodiments, the accessory device 30 may comprise the electronic device 300 of **FIG. 3****,** which includes the processing unit 310 configured to detect the clogging of filter of the hearing device 20 based at least in part on information regarding the usage of the hearing device 20. **FIG. 6** illustrates an example of the accessory device 30. The accessory device 30 of **FIG. 6** is the same as that of **FIG. 2****,** except that the accessory device 30 further includes the components 302, 310, 312 of the electronic device 300. In particular, the accessory device 30 of **FIG. 6** includes the user interface 202 configured to receive user input associated with a usage of the hearing device 20, the screen 204 configured to display device information regarding the hearing device 20, the processing unit (first processing unit) 210 configured to process the user input to generate usage information regarding the usage of the hearing device 20, and a communication unit 220. The communication unit 220 may be a wireless communication unit or a cable connector. In some embodiments, the communication unit 220 may comprise one or more antennas configured to communication with one or more devices, such as with the hearing device 20, the hearing professional device 60, a server, a storage device, etc.

The accessory device 30 also includes the input 302 configured to receive the usage information from the first processing unit 210 and/or from the communication unit 220. For example, the user 70 may operate the user interface 202 to adjust a volume of the hearing device 20, to change an operation mode of the hearing device 20, to change a hearing program of the hearing device 20, to change an operation parameter of the hearing device 20, or any combination of two or more of the foregoing. The first processing unit 210 then processes the user input to generate the usage information, and passes it onto the input 302. As another example, the communication unit 220 may receive usage information regarding the hearing device 20 (e.g., from the hearing device 20, from the hearing professional device 60, etc.), and may pass the usage information onto the input 302. The accessory device 30 also includes the processing unit (second processing unit) 310 configured to detect the clogging of the filter of the hearing device 20 based at least in part on the usage information. The accessory device 30 further includes the output 312 configured to provide a signal indicating the clogging of the filter. The output 312 may provide the signal to the screen 204 for presentation to the user 70, and/or to the communication unit 220.

In some cases, the communication unit 220 may transmit the signal to the hearing device 20 to cause the hearing device 20 to output an alert or a message (e.g., audio message) informing the user 70 that it is time to change the filter of the hearing device 20. The user 70 may then schedule an appointment with the hearing professional 80 for filter replacement, or may reach out to a hearing device manufacturer for assistance to replace the filter.

Alternatively or additionally, the communication unit 220 may transmit the signal to the hearing professional device 60 (e.g., via a network, such as the Internet), informing the hearing professional 80 that the hearing device 20 needs filter replacement. The hearing professional 80 may contact the user 70 to schedule an appointment with the user 70 for replacing the filter of the hearing device 20, and/or may contact the hearing device manufacturer regarding filter replacement.

Alternatively or additionally, the communication unit 220 may transmit the signal to the hearing device manufacturer. In response to such signal, the hearing device manufacturer may send a replacement filter to the hearing professional 80 or to the user 70.

In some embodiments, the communication unit 220 may transmit the signal to a server (e.g., the server 40) or a storage device (e.g., a cloud storage). In some cases, the communication unit 220 may transmit the signal along with related information regarding the hearing device 20 to the server or the storage device. The related information may be the usage information in some embodiments. Also, in some embodiments, the server or the storage device receiving the signal and usage information may be a server or a storage device of a hearing device manufacturer.

During use, the user 70 may operate the hearing device 20 and/or the accessory device 30 to control an operation of the hearing device 20. For example, the user may operate a control at the hearing device 20 to adjust a volume of sound output by the hearing device 20. In such cases, the hearing device 20 may transmit usage information (e.g., change of volume) to the accessory device 30. The communication unit 220 of the accessory device 30 receives the usage information, and provides the usage information to the input 302. The processing unit 310 then processes the usage information to determine whether the filter of the hearing device 20 is clogged. Alternatively or additionally, the user 70 may operate the accessory device 30, via the user interface 202, to change the volume of sound output by the hearing device 20, to change an operation mode of the hearing device 20, to change a hearing program of the hearing device 20, to change an operation parameter of the hearing device 20, etc. The first processing unit 210 then processes the user input to generate the usage information, and passes the usage information to the input 302. The processing unit 310 then processes the usage information to determine whether the filter of the hearing device 20 is clogged.

If the processing unit 310 determines that the filter of the hearing device 20 is clogged, the processing unit 310 may then generate a signal, and may provide such signal via the output 312. The output 312 may provide the signal for display in the screen 204 to inform the user 70 that the filter is clogged, and/or may provide the signal to the communication unit for transmission of the signal to one or more devices, such as the hearing device 20, the hearing professional device 60, a server, a storage device, or any combination of two or more of the foregoing.

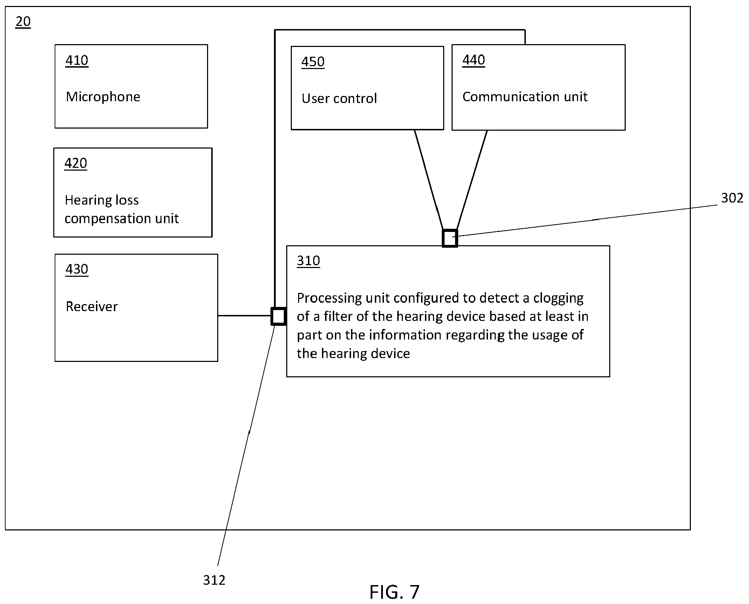

In further embodiments, the hearing device 20 itself may be configured to detect a clogging of the filter of the hearing device 20. **FIG. 7** illustrates another example of the hearing device 20. The hearing device 20 of **FIG. 7** is the same as that shown in **FIG. 6****,** except that it further includes the input 302, the processing unit 310 that is configured to detect a clogging of a filter of the hearing device, and the output 312. In the illustrated embodiments, the input 302 is configured to receive information regarding a usage of the hearing device 20 from the user control 450 of the hearing device 20, and/or information from the communication unit 440. For example, the user 70 may operate the user control 450 to adjust a volume of sound being output from the hearing device 20, to change an operation mode of the hearing device 20, to change a hearing program of the hearing device 20, to change an operation parameter of the hearing device 20, etc. Information regarding these user inputs may be provided to the input 302. Alternatively, or additionally, the user 70 may operate the accessory device 30 to adjust a volume of sound being output from the hearing device 20, to change an operation mode of the hearing device 20, to change a hearing program of the hearing device 20, to change an operation parameter of the hearing device 20, etc. In such cases, the accessory device 30 may then transmit information regarding such user input for reception by the communication unit 440 of the hearing device 20. In some embodiments, the communication unit 440 of the hearing device 20 may also receive information regarding the hearing device 20 from the hearing professional device 60, from a manufacturer, from a server, or from any combination of two or more of the foregoing. The communication unit 440 is configured to provide the received information to the input 302. The processing unit 310 is configured to detect a clogging of the filter of the hearing device 20 based at least in part on the information received by the input 302.

If the processing unit 310 determines that the filter of the hearing device 20 is clogged, the processing unit 310 may then generate a signal, and provide the signal to the receiver 430 and/or the communication unit 440. In some embodiments, the signal may cause the receiver 430 to output an audio alert or message for informing the user 70 that the filter of the hearing device 20 is clogged. In the embodiments in which the signal is transmitted to the communication unit 440, the communication unit 440 may provide the signal for reception by one or more devices, such as by the accessory device 30, by the hearing professional device 60, by a server (e.g., the server 40), by a storage device, by a device associated with a hearing device manufacturer, or any combination of the foregoing. In some embodiments, the signal received by the accessory device 30 may cause the accessory device 30 to display a message to inform the user 70 about the clogged filter. The user 70 may then contact the hearing professional 80 or the hearing device manufacturer to arrange for a replacement of the filter. In some embodiments, the signal received by the hearing professional device 60 may cause the hearing professional device 60 to display a message to inform the hearing professional 80 about the clogged filter of the hearing device 20. The hearing professional 80 may then contact the user 70 arrange for a replacement of the filter.

In the above embodiments, the processing unit 310 that is configured to detect the clogged filter is described as being a part of the server 40, a part of the accessory device 30, or a part of the hearing device 20. In other embodiments, the processing unit 310 may be implemented in the hearing professional device 60. In further embodiments, the processing unit 310 may be implemented in two or more of the devices 20, 30, 40, 60.

Also, in some embodiments, the hearing device 20, the accessory device 30, the server 40, the hearing professional device 60, or any combination of two or more of the foregoing, may include data collection software for obtaining information regarding usage of the hearing device 20 that can be correlated with clogged filter, or that can be used by machine learning to correlate usage of the hearing device 20 (e.g., user activity when using the hearing device 20) with clogged filter.

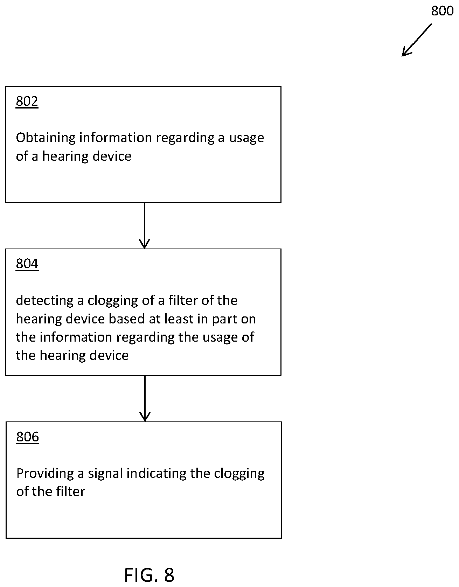

**FIG. 8** illustrates a method 800 for detecting a clogging of a filter of a hearing device. The method 800 may be performed by a server (e.g., the server 40), an accessory device (e.g., the accessory device 30), a hearing device (e.g., the hearing device 10), a hearing professional device (e.g., the hearing professional device 60), or a combination of two or more of the foregoing. The method 800 includes obtaining information regarding a usage of a hearing device (item 802). The method 800 also includes detecting a clogging of a filter of the hearing device based at least in part on the information regarding the usage of the hearing device (item 804). The method 800 further includes providing a signal indicating the clogging of the filter (item 806).

The device(s), system, and method described herein for determining clogged filter of the hearing device 20 is advantageous because they do not require the user 70 to perform any specific test to identify clogged filter. Instead, the user's 70 behavior in using the hearing device 20 (e.g., through logged activity performed at the hearing device 20 and/or at the accessory device 30) is monitored during normal use of the hearing device 20, and the monitored activity is utilized to determine whether the filter of the hearing device 20 is clogged. Accordingly, the user 70 may not even be aware that his/her behavior is being used to help identify clogging of filter while the user 70 is using the hearing device 20. The technique of determining clogged filter described herein also is advantageous because it assists the user 70 in identifying clogged filter, so that the user 70 will not erroneously wonder whether his/her hearing loss has worsened. Furthermore, the device(s), system, and method described herein assists hearing professional and/or hearing device manufacturer to provide filter replacement timely and effectively for the user 70 of the hearing device 20.

Also, in some embodiments, the technique described herein may allow detection of clogging of filter of the hearing device 20 before the filter is completely clogged. For example, the technique described herein may allow detection of clogging of filter when the filter is at least 50% clogged, at least 60% clogged, at least 70% clogged, at least 80% clogged, at least 90% clogged, etc. In other embodiments, the technique described herein may allow detection of clogging of the filter when the filter is completely clogged. Accordingly, when used in this specification, the term "clogged" or any of other similar terms such as "clogging" refer to a condition of a filter that may or may not be completely clogged, such as a condition of a filter that is at least 50% clogged, at least 60% clogged, at least 70% clogged, at least 80% clogged, or at least 90% clogged.

### Specialized Processing System

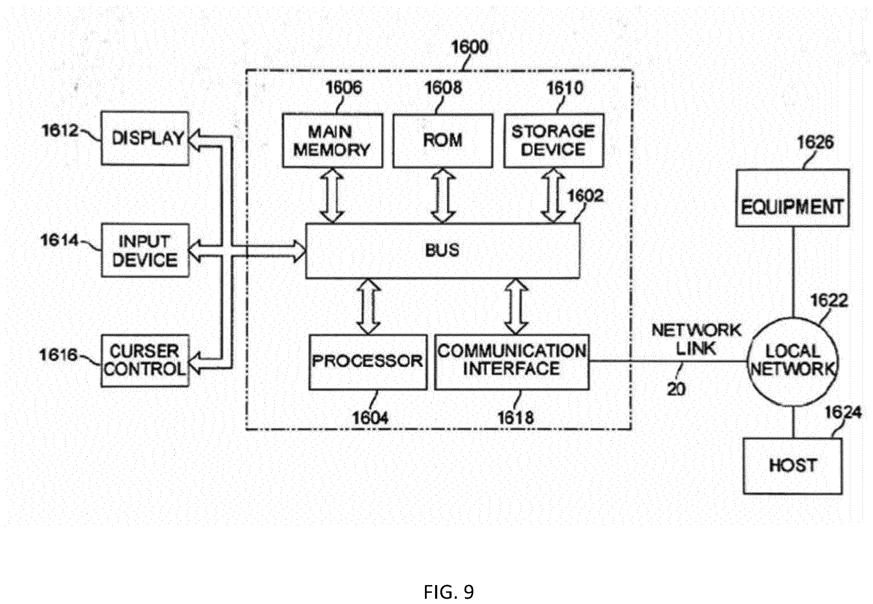

**FIG. 9** illustrates a specialized processing system for implementing one or more electronic devices described herein. For examples, the processing system 1600 may implement the accessory device 30, the server 40, or the hearing professional device 60. Also, in some embodiments, the processing system 1600 or at least a part of the processing system 1600 may be an example of the processing unit 210, the processing unit 310, or the hearing loss compensation unit 420.

Processing system 1600 includes a bus 1602 or other communication mechanism for communicating information, and a processor 1604 coupled with the bus 1602 for processing information. The processor system 1600 also includes a main memory 1606, such as a random access memory (RAM) or other dynamic storage device, coupled to the bus 1602 for storing information and instructions to be executed by the processor 1604. The main memory 1606 also may be used for storing temporary variables or other intermediate information during execution of instructions to be executed by the processor 1604. The processor system 1600 further includes a read only memory (ROM) 1608 or other static storage device coupled to the bus 1602 for storing static information and instructions for the processor 1604. A data storage device 1610, such as a magnetic disk or optical disk, is provided and coupled to the bus 1602 for storing information and instructions.

The processor system 1600 may be coupled via the bus 1602 to a display 167, such as a screen or a flat panel, for displaying information to a user. An input device 1614, including alphanumeric and other keys, or a touchscreen, is coupled to the bus 1602 for communicating information and command selections to processor 1604. Another type of user input device is cursor control 1616, such as a mouse, a trackball, or cursor direction keys for communicating direction information and command selections to processor 1604 and for controlling cursor movement on display 167. This input device typically has two degrees of freedom in two axes, a first axis (e.g., x) and a second axis (e.g., y), that allows the device to specify positions in a plane.

In some embodiments, the processor system 1600 can be used to perform various functions described herein. According to some embodiments, such use is provided by processor system 1600 in response to processor 1604 executing one or more sequences of one or more instructions contained in the main memory 1606. Those skilled in the art will know how to prepare such instructions based on the functions and methods described herein. Such instructions may be read into the main memory 1606 from another processor-readable medium, such as storage device 1610. Execution of the sequences of instructions contained in the main memory 1606 causes the processor 1604 to perform the process steps described herein. One or more processors in a multi-processing arrangement may also be employed to execute the sequences of instructions contained in the main memory 1606. In alternative embodiments, hard-wired circuitry may be used in place of or in combination with software instructions to implement the various embodiments described herein. Thus, embodiments are not limited to any specific combination of hardware circuitry and software.

The term "processor-readable medium" as used herein refers to any medium that participates in providing instructions to the processor 1604 for execution. Such a medium may take many forms, including but not limited to, non-volatile media, volatile media, and transmission media. Non-volatile media includes, for example, optical or magnetic disks, such as the storage device 1610. A non-volatile medium may be considered an example of non-transitory medium. Volatile media includes dynamic memory, such as the main memory 1606. A volatile medium may be considered an example of non-transitory medium. Transmission media includes coaxial cables, copper wire and fiber optics, including the wires that comprise the bus 1602. Transmission media can also take the form of acoustic or light waves, such as those generated during radio wave and infrared data communications.

Common forms of processor-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a processor can read.

Various forms of processor-readable media may be involved in carrying one or more sequences of one or more instructions to the processor 1604 for execution. For example, the instructions may initially be carried on a magnetic disk of a remote computer. The remote computer can load the instructions into its dynamic memory and send the instructions over a network, such as the Internet or a local network. A receiving unit local to the processing system 1600 can receive the data from the network, and provide the data on the bus 1602. The bus 1602 carries the data to the main memory 1606, from which the processor 1604 retrieves and executes the instructions. The instructions received by the main memory 1606 may optionally be stored on the storage device 1610 either before or after execution by the processor 1604.

The processing system 1600 also includes a communication interface 1618 coupled to the bus 1602. The communication interface 1618 provides a two-way data communication coupling to a network link 1620 that is connected to a local network 1622. For example, the communication interface 1618 may be an integrated services digital network (ISDN) card or a modem to provide a data communication connection to a corresponding type of telephone line. As another example, the communication interface 1618 may be a local area network (LAN) card to provide a data communication connection to a compatible LAN. Wireless links may also be implemented. In any such implementation, the communication interface 1618 sends and receives electrical, electromagnetic or optical signals that carry data streams representing various types of information.

The network link 1620 typically provides data communication through one or more networks to other devices. For example, the network link 1620 may provide a connection through local network 1622 to a host computer 1624 or to equipment 1626 such as a radiation beam source or a switch operatively coupled to a radiation beam source. The data streams transported over the network link 1620 can comprise electrical, electromagnetic or optical signals. The signals through the various networks and the signals on the network link 1620 and through the communication interface 1618, which carry data to and from the processing system 1600, are exemplary forms of carrier waves transporting the information. The processing system 1600 can send messages and receive data, including program code, through the network(s), the network link 1620, and the communication interface 1618.

Also disclosed are electronic devices according to any of the following items:
Item 1. An electronic device comprising:
   an input configured to obtain information regarding a usage of a hearing device;
   a processing unit configured to detect a clogging of a filter of the hearing device based at least in part on the information regarding the usage of the hearing device; and
   an output configured to provide a signal indicating the clogging of the filter.
Item 2. The electronic device of item 1, wherein the information regarding the usage of the hearing device comprises an amount of volume increase, a number of volume adjustments, a time period in which the amount of volume increase or the number of volume adjustments occurred, or a combination of two or more of the foregoing.
Item 3. The electronic device of any of items 1-2, wherein the information regarding the usage of the hearing device comprises a number of changes in hearing program in the hearing device, a frequency of the changes in the hearing program, a time period in which the changes in the hearing program occurred, or a combination of two or more of the foregoing.
Item 4. The electronic device of any of items 1-3, wherein the information regarding the usage of the hearing device comprises a number of re-boots of the hearing device, a frequency of the re-boots of the hearing device, a time period in which the re-boots occurred, or a combination of two or more of the foregoing.
Item 5. The electronic device of any of items 1-4, wherein the information regarding the usage of the hearing device comprises a duration of a usage of the hearing device per day, a change in the duration of the usage, or a combination of both.
Item 6. The electronic device of any of items 1-5, wherein the information regarding the usage of the hearing device comprises date of last filter replacement, fitting date, logged user activity when using the hearing device, or a combination of two or more of the foregoing.
Item 7. The electronic device of any of items 1-6, wherein the processing unit is configured to detect the clogging of the filter of the hearing device based at least in part on a satisfaction of a criterion that a change in volume exceeds a threshold within a certain period.
Item 8. The electronic device of item 7, wherein the threshold comprises 3 db or higher, and/or wherein the certain period is less than 3 weeks.
Item 9. The electronic device of any of items 1-8, wherein the processing unit is configured to detect the clogging of the filter of the hearing device by:
   determining whether a change in volume within a period exceeds a volume change threshold;
   determining whether a number of re-boots within the period exceeds a re-boot threshold;
   determining whether a number of program changes within the period exceeds a program change threshold; or
   any combination of two or more of the foregoing.
Item 10. The electronic device of any of items 1-9, wherein the processing unit is configured to detect the clogging of the filter using a neural network model.
Item 11. The electronic device of any of items 1-10, wherein the processing unit is configured to perform machine learning.
Item 12. The processing system of any of items 1-11, wherein the filter comprises a microphone filter or a receiver filter.
Item 13. The electronic device of any of items 1-12, wherein the electronic device comprises a server.
Item 14. The electronic device of item 13, wherein the server is configured to communicate with the hearing device, to communicate with an accessory device associated with the hearing device, or to communicate with both; and
   wherein the server is configured to provide the signal indicating the clogging of the filter for reception by the hearing device and/or by the accessory device.
Item 15. The electronic device of any of items 13-14, wherein the server is configured to communicate with a hearing professional device, and wherein the server is configured to provide the signal indicating the clogging of the filter for reception by the hearing professional device.
Item 16. The electronic device of any of items 13-15, wherein the server is configured to obtain the information regarding the usage of the hearing device from the hearing device, from a hearing professional device, from an accessory device associated with the hearing device, or from a combination of two or more of the foregoing.
Item 17. A hearing system comprising the electronic device of any of items 13-16, and an accessory device associated with the hearing device, wherein the accessory device is configured to obtain information regarding the usage of the hearing device from the hearing device, and to provide the information regarding the usage of the hearing device to the server.
Item 18. The electronic device of any of items 1-16, wherein the electronic device comprises an accessory device configured to communicate with the hearing device.
Item 19. The electronic device of item 18, wherein the accessory device is configured to communicate with a hearing professional device, and wherein the accessory device is configured to provide the signal indicating the clogging of the filter for reception by the hearing professional device.
Item 20. The electronic device of any of items 18-19, wherein the accessory device is configured to provide the signal indicating the clogging of the filter for reception by the hearing device and/or by a server.
Item 21. The electronic device of any of items 18-20, wherein the accessory device is configured to obtain the information regarding the usage of the hearing device from the hearing device, from a hearing professional device, from a server, or from a combination of two or more of the foregoing.
Item 22. The electronic device of any of items 1-21, wherein the electronic device comprises the hearing device.
Item 23. The electronic device of item 22, wherein the hearing device comprises:
   a microphone configured to generate a microphone signal;
   a hearing loss compensation unit configured to generate an output based on the microphone signal; and
   a receiver configured to generate sound based on the output.
Item 24. The electronic device of any of items 22-23, wherein the input of the hearing device is configured to obtain the information regarding the usage of the hearing device by receiving a control signal caused by an operation of a control at the hearing device.
Item 25. The electronic device of any of items 22-24, wherein the input of the hearing device is configured to obtain the information regarding the usage of the hearing device from an accessory device, from a hearing professional device, from a server, or from a combination of two or more of the foregoing.
Item 26. An electronic device comprising:
   a user interface configured to receive a user input associated with a usage of a hearing device;
   a screen configured to display device information regarding the hearing device;
   a processing unit configured to process the user input to generate usage information regarding the usage of the hearing device; and
   a communication unit configured to provide the usage information regarding the usage of the hearing device to a server;
   wherein the communication unit is also configured to receive a signal indicating a clogging of a filter of the hearing device, the signal being based on the usage information regarding the usage of the hearing device.

Although particular features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications and equivalents.

## Claims

1. An electronic device comprising:
an input configured to obtain information regarding a usage of a hearing device;
a processing unit configured to detect a clogging of a filter of the hearing device based at least in part on the information regarding the usage of the hearing device; and
an output configured to provide a signal indicating the clogging of the filter.

2. The electronic device of claim 1, wherein the information regarding the usage of the hearing device comprises an amount of volume increase, a number of volume adjustments, a time period in which the amount of volume increase or the number of volume adjustments occurred, or a combination of two or more of the foregoing.

3. The electronic device of any one of claims 1-2, wherein the information regarding the usage of the hearing device comprises a number of changes in hearing program in the hearing device, a frequency of the changes in the hearing program, a time period in which the changes in the hearing program occurred, or a combination of two or more of the foregoing.

4. The electronic device of any one of claims 1-3, wherein the information regarding the usage of the hearing device comprises a number of re-boots of the hearing device, a frequency of the re-boots of the hearing device, a time period in which the re-boots occurred, or a combination of two or more of the foregoing.

5. The electronic device of any one of claims 1-4, wherein the information regarding the usage of the hearing device comprises a duration of a usage of the hearing device per day, a change in the duration of the usage, or a combination of both.

6. The electronic device of any one of claims 1-5, wherein the information regarding the usage of the hearing device comprises date of last filter replacement, fitting date, logged user activity when using the hearing device, or a combination of two or more of the foregoing.

7. The electronic device of any one of claims 1-6, wherein the processing unit is configured to detect the clogging of the filter of the hearing device based at least in part on a satisfaction of a criterion that a change in volume exceeds a threshold within a certain period, and wherein the threshold comprises 3 db or higher, and/or wherein the certain period is less than 3 weeks.

8. The electronic device of any one of claims 1-7, wherein the processing unit is configured to detect the clogging of the filter of the hearing device by:
determining whether a change in volume within a period exceeds a volume change threshold;
determining whether a number of re-boots within the period exceeds a re-boot threshold;
determining whether a number of program changes within the period exceeds a program change threshold; or
any combination of two or more of the foregoing.

9. The electronic device of any one of claims 1-8, wherein the processing unit is configured to detect the clogging of the filter using a neural network model and/or wherein the processing unit is configured to perform machine learning.

10. The electronic device of any one of claims 1-9, wherein the electronic device comprises a server, wherein the server is configured to communicate with the hearing device, to communicate with an accessory device associated with the hearing device, or to communicate with both; and
wherein the server is configured to provide the signal indicating the clogging of the filter for reception by the hearing device and/or by the accessory device.
